(19) Europäisches Patentamt
European Patent Office
Office européen des brevets

(11) Veröffentlichungsnummer : **0 071 960**
**B1**

# (12) EUROPÄISCHE PATENTSCHRIFT

(45) Veröffentlichungstag der Patentschrift :
28.05.86

(21) Anmeldenummer : 82107002.6

(22) Anmeldetag : 03.08.82

(51) Int. Cl.⁴ : **C 02 F   3/12, C 02 F   3/30**

(54) Anlage zur biologischen Abwasserreinigung sowie Verfahren zum Betrieb der Anlage.

(30) Priorität : 03.08.81 DE 3130718

(43) Veröffentlichungstag der Anmeldung :
16.02.83 Patentblatt 83/07

(45) Bekanntmachung des Hinweises auf die Patenterteilung : 28.05.86 Patentblatt 86/22

(84) Benannte Vertragsstaaten :
AT BE CH DE FR IT LI

(56) Entgegenhaltungen :
DE-A- 2 125 983
GB-A- 1 449 140
NL-A- 2 149 552
NL-A- 7 500 438
US-A- 1 456 914
Lehr- und Handbuch der Abwassertechnik, Bd II,
Seite 488 (1975)

(73) Patentinhaber : Passavant-Werke AG & Co. KG

D-6209 Aarbergen 7 (DE)

(72) Erfinder : Kashabian, Jafar
Am Schützenplatz 1
D-3548 Arolsen 7 (DE)

(74) Vertreter : Glawe, Delfs, Moll & Partner Patentanwälte
Rothenbaumchaussee 58 Postfach 2570
D-2000 Hamburg 13 (DE)

EP 0 071 960 B1

# 0 071 960

**Beschreibung**

Die Erfindung betrifft eine Anlage zur biologischen Abwasserreinigung mit mindestens drei hintereinander durchströmsten, mit Belüftung ausgerüsteten Kammern und einen Nachklärbecken, wobei die erste und wahlweise auch folgenden Kammern über einen Schlammverteiler mit Rücklaufschlamm vom Nachklärbecken beaufschlagbar und als vom Abwasserzulauf getrennte Wiederbelüftungskammern für den Rücklaufschlamm betreibbar sind und die letzte und wahlweise auch vorhergehende Kammern über einen Abwasserverteiler mit zulaufendem Abwasser beaufschlagbar und als Kontaktkammern für das Gemisch aus Abwasser und Rücklaufschlamm betreibbar sind, wobei Abwasserverteiler und Schlammverteiler zu einer gemeinsamen Verteilerrinne vereinigt sind, die durch Absperrorgane in den einzelnen Kammern zugeordnete und mit ihnen über Absperrorgane verbundene Abschnitte unterteilt und sowohl an dem Abwasserzulauf als auch mittels Absperrorgan an die Rücklaufschlammleitung vom Nachklärbecken angeschlossen ist, so daß durch geeignete Einstellung der Absperrorgane jede der Kammern wahlweise als Wiederbelüftungs- oder Kontaktkammer betreibbar ist.

Der heutige Stand der Abwassertechnik kennt viele verschiedene Betriebsarten von biologischen Abwasserkläranlagen, die je nach der Beschaffenheit des Abwassers und der Belastung der Anlage ihre Vor- und Nachteile haben. So kann es erwünscht sein, die Kläranlage auch ohne Schlammwiederbelüftung zu fahren und das gesamte Volumen der Anlage zur Kontaktbelüftung des Abwassers zu benützen. Statt der verteilten Abwasserzuführung zu den einzelnen Kontaktkammern ist in vielen Fällen eine sogenannte Kaskadenanordnung der Kontaktkammer, bei der in konventioneller Weise das gesamte Abwasser nur der ersten Kontaktkammer zugeführt wird und dann zusammen mit dem Rücklaufschlamm die nachfolgenden Kammern durchströmt, vorteilhafter. In diesem Fall können sich in den einzelnen Kontaktkammern unterschiedliche Betriebsverhältnisse mit verschiedener Schlammbeschaffenheit einstellen, was für den möglichst vollständigen Abbau der verschiedenen Schmutzanteile vorteilhaft sein kann.

Von ganz besonderer Bedeutung ist der Wunsch, je nach Bedarf nur einen Teil der Kammern zu betreiben und die anderen stillzusetzen. Dies ist besonders wichtig bei im Jahresverlauf stark schwankender Menge und/oder Zusammensetzung des Abwassers, z. B. in Fremdenverkehrsgemeinden oder bei Einleitung von gewerblichen Abwässern aus Kampagnebetrieben, wie z. B. Konservenfabriken, Weinkellereien u. dgl. Ist in diesen Fällen die Anlage auf eine unveränderliche Größe ausgelegt, so wird sie entweder bei starkem Abwasserzulauf überlastet oder bei schwachem Abwasserzulauf mit unnötig hohem Energieaufwand und ungenügender Schlammernährung, die zur Schlammentartung bzw. Blähschlammbildung führen kann, betrieben.

In modernen Kläranlagen wird ferner zunehmend die Forderung nach einer wirksamen Denitrifikation, d. h. Abbau der Stickstoffverbindungen, gestellt. Hierfür benötigt man eine Denitrifikationsstufe, in der die im Abwasser enthaltenen und/oder bei der Kontaktbelüftung gebildeten Nitrate und Nitrite durch längeres Rühren bei abgeschalteter Belüftung abgebaut werden. Je nach der Beschaffenheit des Abwassers kann es zweckmäßig sein, diese Denitrifikation am Ende der Kontaktstufe als nachgeschaltete Denitrifikation oder zu Beginn der Kontaktstufe als vorgeschaltete Denitrifikation durchzuführen, wobei in letzterem Fall Rücklaufwasser aus der letzten Kontaktstufe oder dem Nachklärbecken zugefügt werden muß.

Eine Anlage zur biologischen Abwasserreinigung der eingangs genannten Art, die diese Forderungen im wesentlichen erfüllt ist bekannt aus der US-A-1 456 914. Diese bekannte Anlage hat jedoch den Nachteil, daß zur zweckmäßigen Verbindung der einzelnen Kammern mit dem Abwasser-Rücklaufschlammverteiler und gegebenenfalls Rücklauf-Wasserleitungen eine ungemein komplizierte, verwirrende Anzahl von unterschiedlichen Rohren mit enormen Leitungsaufwand benötigt wird.

Der Erfindung liegt deshalb die Aufgabe zugrunde, eine vielseitige, kompakte Abwasserreinigungsanlage der eingangs genannten Art zu schaffen, die mit erheblich weniger Leitungsbedarf auskommt.

Diese Aufgabe wird erfindungsgemäß dadurch gelöst, daß die Kammern als durch Wände getrennte Abschnitte eines das Nachklärbecken umgebenden Ringbeckens ausgebildet und der Abwasser- und Schlammverteiler als ringförmige Verteilerrine am Umfang des Ringbeckens angeordnet ist.

Zwar ist aus « Lehr- und Handbuch der Abwassertechnik », Band II, 2. Auflage (1975), S. 488, eine Abwasserreinigungsanlage mit einem Ringbecken bekannt. Bei dieser bekannten Anlage ist dieses Ringbecken jedoch nur sinnvoll, wenn eine ausgeprägte horizontale Strömung erwünscht ist. Deshalb können beim bekannten Ringbecken keine radialen Abschottungen und Absperrorgane vorgesehen sein, ohne die gewünschte Funktion dieses Ringbeckens zu zerstören.

Dadurch, daß die einzelnen Kammern erfindungsgemäß in einer Ringform angeordnet sind und die vereinigte Abwasser- und Schlammverteilerleitung zu einem Kreis geschlossen ist, der vorzugsweise zwischen den Kammern und dem Nachklärbecken angeordnet ist, ist es ohne großen Leitungsaufwand möglich, das Abwasser und den Rücklaufschlamm wahlweise praktisch in jede Kammer zu leiten. Dadurch ist mit geringem Aufwand eine sehr vielseitige und kompakte Abwasserreinigungsanlage geschaffen.

Da bei dem erfindungsgemäßen flexiblen Betrieb der Anlage die Belüftung in den einzelnen Becken intervallartig oder für längere Zeit stillgesetzt werden muß, ist es vorteilhaft, wenn die Kammern mit am Boden verlegten feinblasigen Druckbelüftern ausgerüstet sind. Besonders geeignet sind Gummischlä-

<div align="center">2</div>

uche mit eingeschnittenen Schlitzen, die sich bei Druckbeaufschlagung des Schlauches öffnen und bei Abschalten des Luftdrucks wieder schließen, so daß auch bei längerem Stillstand der Belüftung eine Verstopfung der Luftaustrittsöffnungen nicht auftritt.

Mindestens für den Betrieb einer Kammer als Denitrifikationskammer sind Rührorgane zum Umwälzen des Kammerinhalts bei fehlender Belüftung erforderlich. Zu diesem Zweck kann jede Kammer mit fest installierten, wahlweise einschaltbaren Rührwerken versehen sein. Billiger ist es, wenn herausnehmbare transportable Rührwerke wahlweise in jede Kammer als Umwälzeinrichtung einsetzbar sind. Die Rührwerke können durch einfache Gestelle am Beckenboden abgestützt sein, und das Herausheben und Wiedereinsetzen kann mit einer Hebeeinrichtung erfolgen, die an einer ohnehin für den Räumer des Nachklärbeckens erforderlichen fahrbaren Brücke angeordnet ist.

Gemäß einer weiteren Ausgestaltung der Erfindung kann der Abwasserzulauf auch unmittelbar mit dem Nachklärbecken verbunden werden, wodurch sämtliche Kammern stillgesetzt werden können. Hierdurch ist gewährleistet, daß bei einem zum Beispiel zwecks Reparatur oder Generalüberholung bedingten Stillstand sämtlicher Kammern das zulaufende Abwasser wenigstens einer mechanischen Klärung im Nachklärbecken unterworfen werden kann.

Im folgenden wird die Erfindung anhand eines Ausführungsbeispiels unter Bezugnahme auf die Zeichnungen genauer beschrieben. Es zeigen :

Figur 1   ein schematisches Blockschaltbild einer ersten Betriebsart der erfindungsgemäßen Anlage gemäß Fig. 10 mit vier Kammern.

Figur 2 bis 8   schematisch die gleiche Anlage nach Umstellung auf andere Betriebsarten.

Figur 9   ein Schema der Betriebsweise der gleichen Anlage mit einer Ergänzung für Schockloading bzw. Simultanfällung ; und

Figur 10   einen schematischen Grundriß der erfindungsgemäßen Anlage mit fünf Kammern.

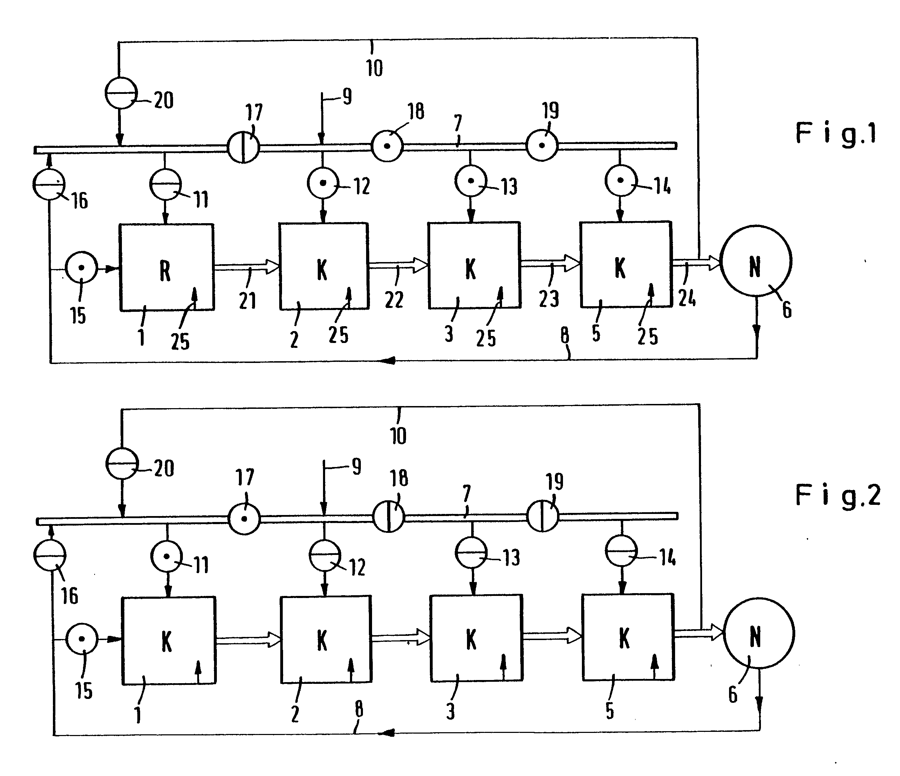

Bei der in Fig. 1 nur als Fließschema dargestellten Anlage zur biologischen Abwasserreinigung sind vier Belüftungskammern 1, 2, 3, 5 sowie ein Nachklärbecken 6 hydraulisch durch angedeute Verbindungen 21, 22, 23, 24 so miteinander verbunden, daß sie nacheinander durchströmt werden. Bei den Verbindungen kann es sich z. B. um oben liegende Überstromwehre oder unter Wasser liegende Durchlässe in den Trennwänden zwischen den Kammern handeln, die außerdem mit (nicht dargestellten) Absperrorgangen verschlossen werden können. Entlang den Kammern läuft eine Verteilerrine 7, die mit den einzelnen Kammern über Absperrorgane 11, 12, 13, 14 verbunden und außerdem durch Absperrorgane 17, 18, 19 in Abschnitte unterteilt ist. Eine vom Nachklärbecken 6 ausgehende Rücklaufschlammleitung 8 ist über ein Absperrorgan 15 mit der ersten Kammer 1 und über ein Absperrorgan 16 mit der Verteilerrine 7 verbunden. Außerdem geht von der Ablaufleitung 24 der letzten Kammer 5 (oder vom Nachklärbecken 6) eine Rücklaufwasserleitung 10 aus, die über ein Absperrorgan 20 mit der Verteilerrine 7 verbunden ist.

In der Zeichnung sind ganz oder teilweise geöffnete Absperrorgane durch eine Punkt und geschlossene Absperrorgane durch einen Querstrich gekennzeichnet. Durch Pfeile 25 im Bodenbereich jeder Kammer ist angedeutet, daß die Belüftung der betreffenden Kammer eingeschaltet ist.

In Fig. 1 ist folgende Betrisebsweise der Anlage dargestellt : Die erste Kammer 1 arbeitet als Wiederbelüftungskammer zur Regeneration des ihr über das Absperrorgan 15 zugeführten Rücklaufschlamms, was durch den Buchstaben R für Regeneration angedeutet ist. Der Abwasserzulauf zur Kammer 1 ist gesperrt. Der somit ohne Substratzufuhr unter Belüftung gehaltene Rücklaufschlamm wird in der Kammer 1 regeneriert und somit aktiviert. Die Adsorptions- und Absorptionsfähigkeit der Mikroorganismen wird dadurch gesteigert, so daß stets ein ausreichender Vorrat von genügend aktiver und hoch absorptiver Biomasse für die nachfolgenden Reinigungsstufen vorrätig gehalten wird.

Das über die Leitung 9 zulaufende Abwasser wird durch die Verteilerrinne 7 und die geöffneten Absperrorgange 12, 13, 14 verteilt den Kammern 2, 3 und 5 zugeführt, die als Kontaktkammern arbeiten. Jedes der Absperrorgane 11, 12, 13, 14 kann nicht nur voll geöffnet, sondern auch auf einen beliebig gedrosselten Querschnitt eingestellt werden, so daß das Abwasser auf die einzelnen Kammern gezielt, z. B. in Anpassung an die Tagesganglinie, verteilt werden kann. Damit werden die Aufenthaltszeiten des Abwassers in den Kontaktkammern auf die optimale Dauer begrenzt.

Die Verteilung des Abwassers zu den Kontaktkammern kann manuell mittels einmalig entsprechend eingestellter Absperrorgane, z. B. Rinnenabsenkschieber, erfolgen, oder aber automatisch durch Schieber mit Stellantrieben, die in Abhängigkeit von Meßwerten, wie z. B. der Abwassermenge, dem freien $O_2$-Gehalt, eine Sauerstoffzehrungsmessung und dgl. gesteuert werden können. Bei dieser Steuerungsmöglichkeit paßt sich die biologische Reinigungsstufe den jeweiligen Abwasserzuflußmengen und Schmutzfrachten felxibel an.

Bei der Anlage gemäß Fig. 1 kann das Gesamtvolumen des Wiederbelüftungsteils und Kontaktteils der Anlage verändert werden, indem z. B. in Fig. 1 durch Schließen der Absperrorgane 12 und gegebenenfalls 13 auch die Kammern 2 und gegebenenfalls 3 als Wiederbelüftungskammern und nur noch die Kammern 3 und 5 oder die Kammer 5 alleine als Kontaktkammer betrieben werden.

Die in Fig. 2 dargestellte Betriebsart der Anlage arbeitet ohne Wiederbelüftung des Rücklaufschlamms und ohne verteilte Abwasserzuführung. Alle Kammern 1, 2, 3, 5 arbeiten als Kontaktkammern. Nur der ersten Kammer 1 wird Rücklaufschlamm über 15 und Abwasser über 9, 17, 11 zugeführt, und das Schlamm-Abwassergemisch strömt kaskadenartig durch die nachfolgenden Kontaktkammern 2, 3, 5.

3

Diese als Kaskadenschaltung, auch Pfropfenströmung oder Piston-Flow bekannte Betriebsweise hat den Vorteil, daß sich in den einzelnen Kontaktkammern 1, 2, 3, 5 sehr unterschiedliche Betriebsbedingungen mit unterschiedlicher Schlammbelastung einstellen können, die jeweils für unterschiedliche Bestandteile oder Konzentrationen der Schmutzfracht ihre optimale Reinigungswirkung entfalten können. Je nach den Belastungsbedingungen kann durch eine solche Kaskadenschaltung im Vergleich zu einer verteilten Abwasserzuführung eine deutliche Verbesserung der Ablaufwerte und der Eigenschaften des Belebtschlamms erzielt werden.

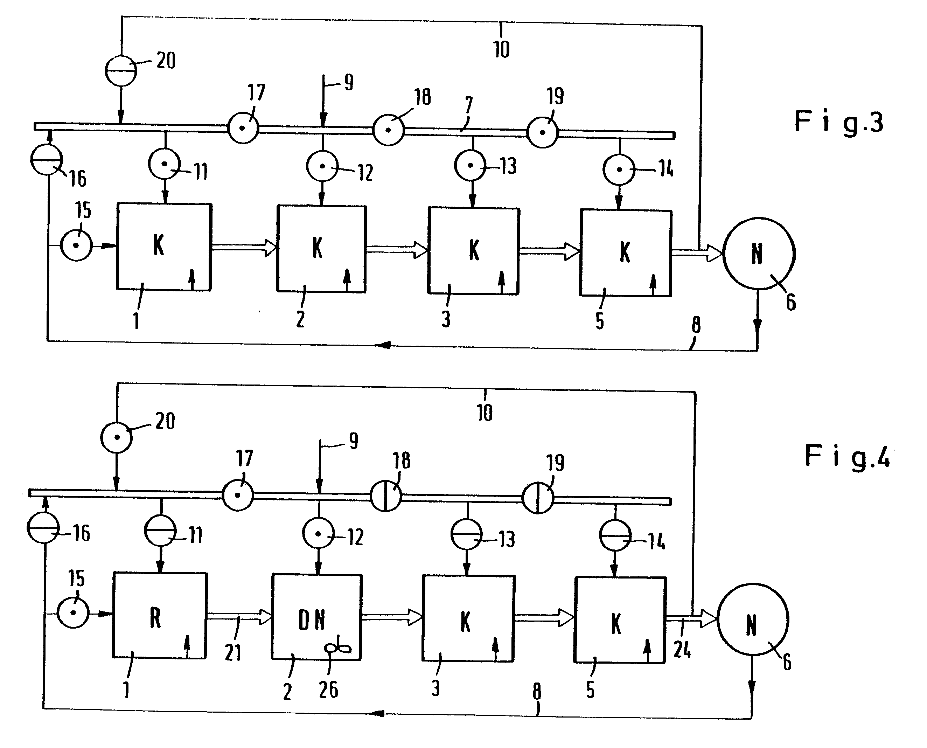

Fig. 3 zeigt eine Betriebsweise ebenfalls ohne Schlammwiederbelüftung, bei der sämtliche Kammern 1, 2, 3, 5 als Kontaktkammern arbeiten, aber mit dem zuströmenden Abwasser in verteilter Abwasserzuführung jeweils direkt beaufschlagt werden. In vielen Anwendungsfällen, insbesondere bei der Reinigung von häuslichen Abwässern mit mäßigem Anteil an gewerblichen Abwässern, und bei einer Raumbelastung von z. B. 0,2 kg $BSB_5/m^3$.Tag und einer Schlammbelastung von z. B. 0,05 kg $BSB_5$/kg Biomasse.Tag kann man davon ausgehen, daß der aus dem Nachklärbecken 6 abgezogene Belebtschlamm sich noch im ausreichend aktivierten Zustand befindet, so daß eine zusätzliche Belüftung des Belebtschlammes nicht notwendig und mit überschüssigem Energieaufwand verbunden ist.

Bei der Stellung nach Fig. 3 wird der Rücklaufschlamm über die Leitung 8 und das Absperrorgan 15 der ersten Kammer 1 zugeführt. Es ist aber auch möglich durch Schließen des Absperrorgans 15 und Öffnen des Absperrorgans 16 den Rücklaufschlamm ebenfalls über die Verteilerrinne 7 verteilt den einzelnen Kammern 1, 2, 3, 5 zuzuführen. Eine solche verteilte Rücklaufschlammzuführung ermöglicht eine individuelle Einstellung der Schlammengen in den einzelnen Kammern und damit eine optimale Anpassung an die jeweiligen Reinigungsbedingungen.

Fig. 4 zeigt eine Betriebsweise mit Schlammwiederbelüftung und vorgeschalteter Denitrifikation. Die Kammer 1 wird als Wiederbelüftungskammer R betrieben, in der der über 15 zugeführte Rücklaufschlamm bei mittels 11 abgesperrter Abwasserzufuhr belüftet und regeneriert wird. Nitrathaltiges Abwasser-Schlammgemisch wird aus dem Ablauf 24 der letzten Kammer 5 entnommen und über die Leitung 10 sowie die Absperrorgane 20, 17, 12 der Kammer 2 zugeführt, zusammen mit dem über 9 und 12 zuströmenden Abwasser. Diese Bestandteile werden in der als Denitrifikationskammer DN arbeitenden Kammer 2 zusammen mit dem aus der Kammer 1 über die Verbindung 21 zuströmenden regenerierten Rücklaufschlamm ohne Belüftung und unter entsprechender Turbulenz, die mittels eines oder mehrerer Rührwerke 26 erzeugt wird, umgewälzt, wobei die Nitrit- und Nitratverbindungen abgebaut werden und der freigesetzte Stickstoff entweichen kann. Das auf diese Weise von Nitrit- und Nitratverbindungen zum großen Teil befreite Abwasser-Schlammgemisch durchströmt dann kaskadenförmig die nachgeschalteten Kammern 3 und 5, die unter Belüftung als Kontaktkammern betrieben werden. Da sich beim Abbau der Schmutzstoffe in den Kammern 3 und 5 wieder Nitrat- bzw. Nitritverbindungen bilden können, wird der überwiegende Teil des bei 24 ablaufenden Wasserschlammgemisches über die Leitung 10 als Rücklaufwasser der Kammer 2 wieder zugeführt. Die Menge des Rücklaufwassers beträgt vorzugsweise ca. 500 % der Menge des bei 9 zuströmenden Abwassers. Nur ein Sechstel der bei 24 abströmenden Flüssigkeitsmenge gelangt daher in das Nachklärbecken 6.

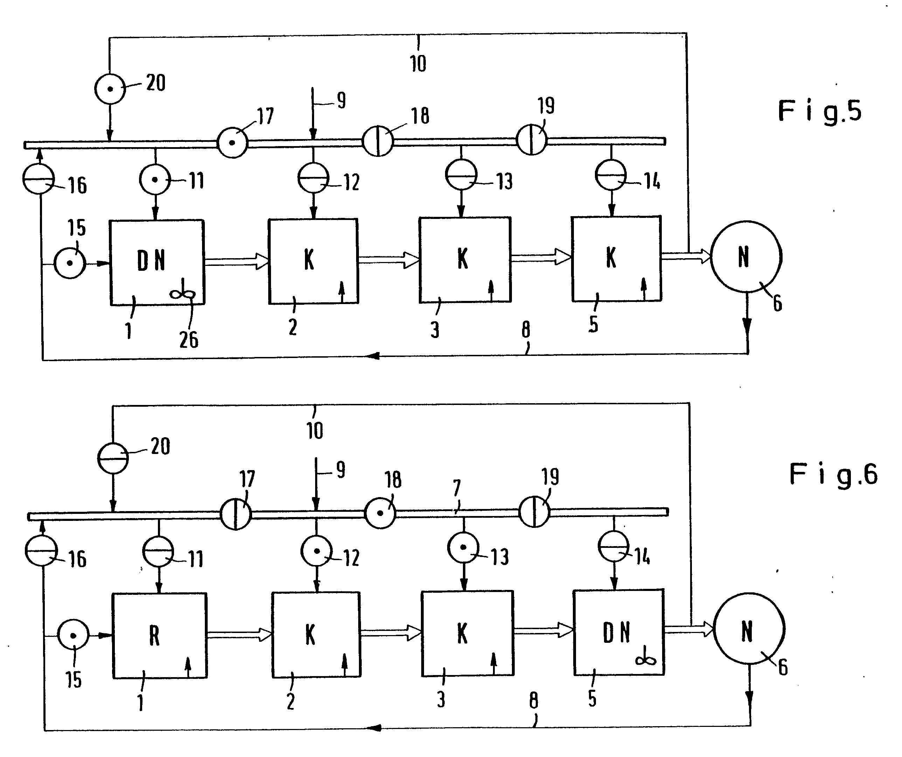

Fig. 5 zeigt eine Betriebsweise mit vorgeschalteter Denitrifikation, aber ohne Wiederbelüftung des Rücklaufschlamms. Die erste Kammer 1 ist in diesem Fall die Denitrifikationskammer, der über 10, 20 und 11 das Rücklaufwasser, über 9, 17 und 11 das Abwasser und über 15 der Rücklaufschlamm zugeführt werden, wo sie wiederum ohne Belüftung mittels Rührwerk 26 in Turbulenz gehalten werden. Die nachfolgenden Kammern 2, 3, 5 arbeiten als Kontaktkammern in Kaskadenschaltung.

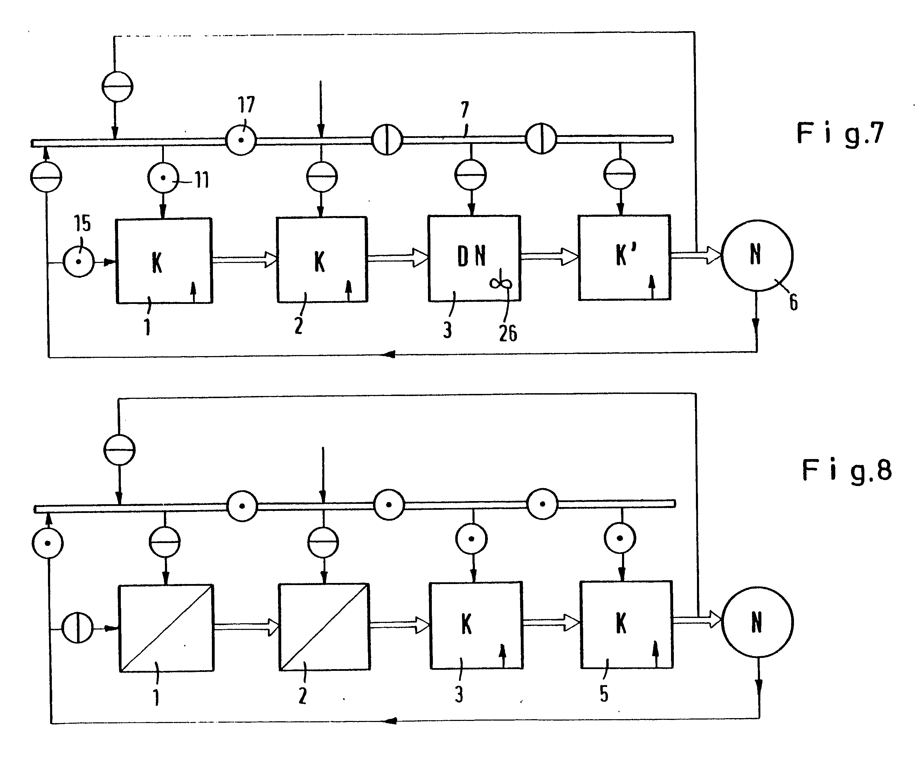

Die Betriebsweise nach Fig. 6 arbeitet mit Wiederbelüftung und nachgeschalteter Denitrifikation. Die erste Kammer 1 ist wieder von der Verteilerrinne 7 abgesperrt und dient zur Regeneration des über 15 zugeführten Rücklaufschlamms. Die Kammern 2 und 3 arbeiten als Kontaktkammern und zwar mit verteilter Abwasserzuführung über 12 und 13. Die Kammer 5 arbeitet als nachgeschaltete Denitrifikationskammer ohne Belüftung. Eine Rücklaufwasserzuführung zur Denitrifikationskammer 5 ist in diesem Fall nicht erforderlich, da in dem in den Kontaktkammern 2 und 3 behandelten Schlammabwassergemisch ausreichend Nitrit- und Nitratverbindungen für den Abbau vorhanden sind.

Die Betriebsweise nach Fig. 7 arbeitet ohne Wiederbelüftung sowie mit nachgeschalteter Denitrifikation und anschließender Zwischenbelüftung. Der ersten Kammer 1, die als Kontaktkammer arbeitet, werden über 15 der Rücklaufschlamm und über 17 und 11 das Abwasser zugeführt. Die Kammer 2 ist als Kontaktkammer in Kaskadenschaltung nachgeschaltet. Die dritte Kammer 3 arbeitet als Denitrifikationskammer ohne Belüftung und mit turbulenter Umwälzung. Die letzte Kammer 5 arbeitet wiederum als Kontaktkammer K' zur sogenannten Zwischenbelüftung.

Gemäß Fig. 8 arbeitet nur ein Teilvolumen der gesamten Anlage, nämlich die Kammern 3 und 5 als Kontaktkammern, während die Kammern 1 und 2 völlig abgeschaltet sind. Über die Verteilerrinne 7 wird sowohl der Rücklaufschlamm über die geöffneten Absperrorgane 16, 17 als auch das Abwasser den Kontaktkammern 3, 5 verteilt zugeführt. Selbstverständlich ist auch eine Zuführung lediglich zur Kontaktkammer 3 und ein Betrieb der letzten Kammer 5 in Kaskadenschaltung möglich.

Sollen für Notfälle od. dgl. alle Kammern 1, 2, 3, 5 zeitweise stillgesetzt werden, so kann eine (nicht dargestellte) Verbindung zwischen dem Abwasserzulauf 9 und dem Nachklärbecken 6 vorgesehen sein, entweder über die Verteilerrinne 7 nach 24, oder in Form einer die Verteilerrinne 7 umgehenden direkten Verbindung zwischen 9 und 24 bzw. 6.

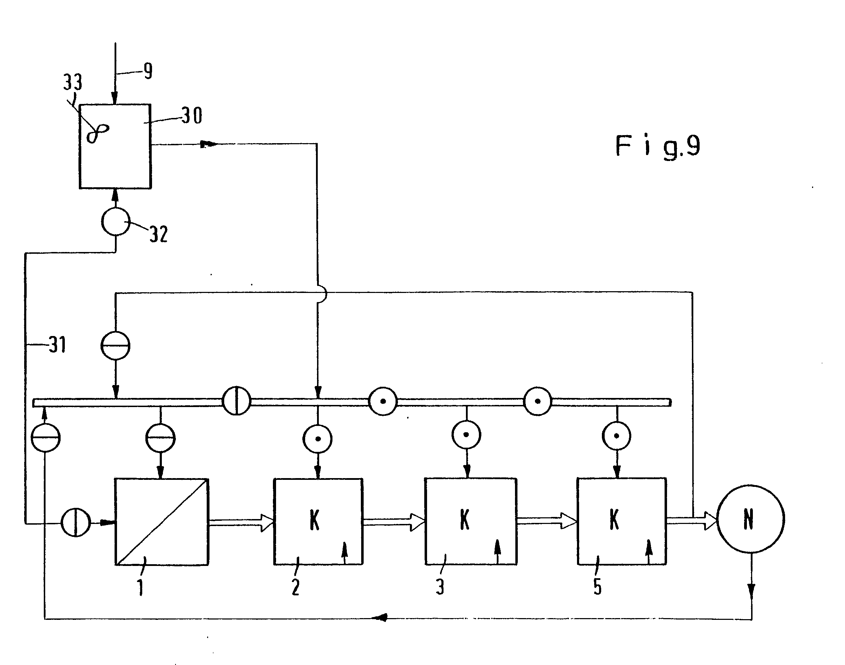

Fig. 9 zeigt eine in Fig. 1 bis 8 der Einfachheit halber weggelassene Ergänzung der Anlage in Form einer in den Abwasserzulauf 9 geschalteten Aufenthaltskammer 30, in der auch eine Rücklaufschlammleitung 31 mit Absperrorgan 32 mündet. Damit ist ein Betrieb der Anlage nach dem sogenannten Shock-Loading (Schockbelastung) möglich. Zu diesem Zweck wird der gesamte Rücklaufschlamm der Aufenthaltsbehälter 30 zugeführt und dort mit dem Abwasser ohne Belüftung gemischt und mittels Rührwerks 33 umgerührt. Die Aufenthaltszeit kann ca. 10 bis 20 Minuten betragen. Eine solche Behandlung hat sich insbesondere zur Bekämpfung von Blähschlammbildung als vorteilhaft erwiesen. Das so vorbehandelte Schlamm-Wassergemisch gelangt über die Verteilerrinne 7 mit verteilter Zuführung zu den als Kontaktkammern betriebenen Kammern 2, 3 und 5. Die Kammer 1 ist außer Betrieb.

Anstelle oder zusätzlich zu einer Schockbelastung kann in der Aufenthaltskammer 30 auch eine Zugabe von Fällungschemikalien erfolgen, so daß in den anschließenden Kontaktkammern 2, 3, 5 auch eine chemische Ausfällung (Simultanfällung) von Verunreinigungen stattfinden kann.

Die vorstehend beschriebenen verschiedenen Betriebsweisen der Anlage können je nach Bedarf ohne bauliche Änderungen und ohne Betriebsunterbrechung eingestellt und gewechselt werden.

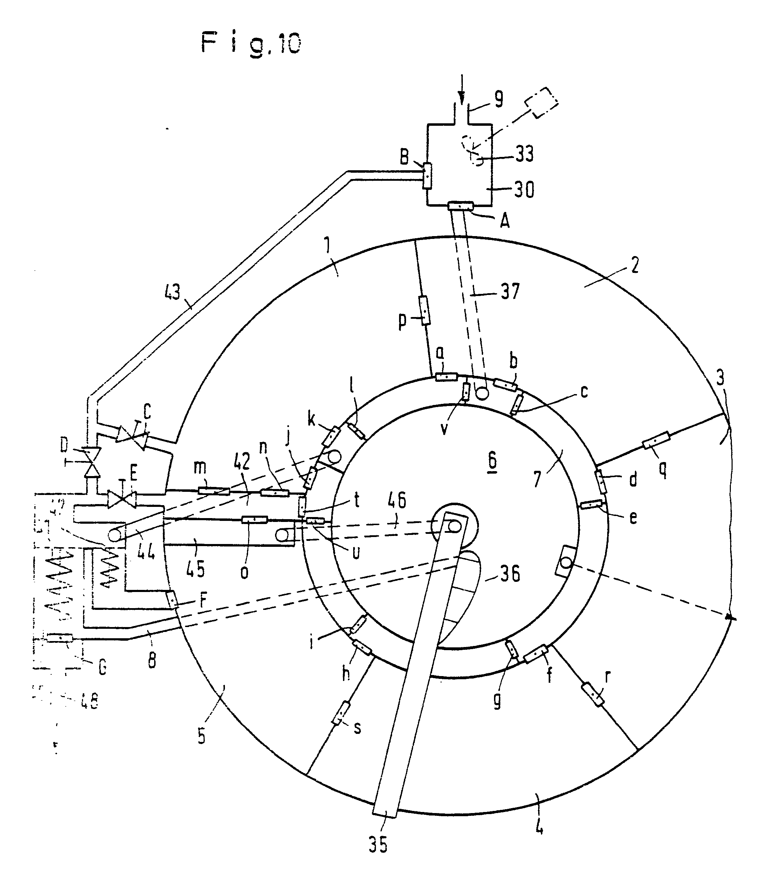

Eine konkrete bauliche Ausführung der erfindungsgemäßen Anlage hat den in Fig. 10 schematisch dargestellten Grundriß. Das Nachklärbecken 6 ist konzentrisch von einem ringförmigen Belebungsbecken umgeben, welches in die Kammern 1, 2, 3, 4, 5 aufgeteilt ist, an deren Innenumfang die ringförmige Verteilerrinne 7 entlanggeführt ist. Diese ist durch Absperrorgane c, e, g, i, u, l und v in einzelne Abschnitte unterteilt, die ihrerseits über Absperrorgane a, b, d, f, h, j, k mit den Kammern 1, 2, 3, 4, 5 verbunden sind. Durch Absperrorgane p, g, r, s verschließbare Öffnungen in den Trennwänden zwischen den Kammern 1, 2, 3, 4, 5 stellen deren hydraulische Verbindung her. Das Abwasser strömt bei 9 zu und gelangt über die Aufenthaltskammer 30 und eine Dükerleitung 37 in die Verteilerrinne 7. Eine drehbare Brücke 35 trägt einen Schlammräumer 36 für das Nachklärbecken 6. Eine von der Sohle des Nachklärbeckens 5 ausgehende Rücklaufschlammleitung 8 führt zu einem Schlammhebewerk 40 in welchem der Rücklaufschlamm mittels eines Förderorgans, z. B. einer Förderschnecke 41 auf ausreichendes Niveau gehoben und entweder über ein Absperrorgan E einer Schlammzuführungsrinne 42 der ersten Kammer 1 oder über ein Absperrorgan D einer Verbindungsleitung 43 zur Aufenthaltskammer 30 zugeführt werden kann. Über eine Dükerleitung 44 kann Rücklaufschlamm auch direkt der Verteilerrinne 7 zugeführt werden. Mit 45 ist die Ablaufrinne der letzten Kammer 5 bezeichnet, die über eine Dükerleitung 46 mit dem Nachklärbecken 6 verbunden ist. Ferner kann über ein Absperrorgan F Schwimmschlamm aus der Kammer 5 abgezogen und entweder entfernt oder in bestimmten Fällen mittels eines Förderorgans 47 über die Dükerleitung 44 in die Verteilerrinne 7 gefördert werden.

Überschußschlamm kann über das Absperrorgan G bei 48 abgezogen werden.

In der nachstehenden Tabelle sind für verschiedene, mit I bis X gekennzeichnet Betriebsweisen die Stellungen (o für offen oder gedrosselt, — für geschlossen, x für beliebig) der einzelnen Absperrorgane angegeben. Diese Betriebsweisen stimmen im wesentlichen mit denen gemäß Fig. 1 bis 9 erläuterten Betriebsweisen überein und sind die folgenden :

I : Schlammwiederbelüftung in Kammer 1 ; Kontaktbetrieb in den Kammern 2 bis 5 mit verteilter Abwasserzuführung über die offenen Absperrorgane b, d, f, h. Der Rücklaufschlamm wird der Kammer 1 über das Hebewerk 41, das Absperrorgan E und die Rinne 42 zugeführt.

II : Keine Wiederbelüftung, alle Becken 1 bis 5 im Kontaktbetrieb in Kaskadenschaltung. Das Abwasser wird über 9, B, 43 und C, der Rücklaufschlamm über 41, E und 42 dem Becken 1 zugeführt.

III : Keine Wiederbelüftung, alle Kammern 1 bis 5 im Kontaktbetrieb bei verteilter Abwasserzuführung. Das Abwasser wird über 9, A, 37 und die geöffneten Absperrorgane b, d, f, h und j den Kammern 2, 3, 4, 5 und 1 zugeführt.

IV : Wiederbelüftung und vorgeschaltete Denitrifikation : In Kammer 1 wird der über 42 zugeführte Rücklaufschlamm wiederbelüftet. Bei F abgezogenes Rücklaufwasser-Schwimmschlammgemisch wird über 47 und 44 der Verteilerrinne 7 und aus dieser über a der Kammer 2 zugeführt, wo es zusammen mit dem über 9, A, 37, b, zuströmenden Abwasser und dem über p zufließenden wiederbelüfteten Schlamm der Denitrifikation unterworfen und zu diesem Zweck mittels der (nicht dargestellten) Rührwerke ohne Belüftung umgewälzt wird. Die Kammern 3, 4, 5 arbeiten als in Kaskadenanordnung nachgeschaltete Kontaktkammern.

V : Vorgeschaltete Denitrifikation ohne Schlammwiederbelüftung. Der Kammer 1 wird das Abwasser über 43 und C, der Rücklaufschlamm über 41, E und 42 sowie Rücklaufwasser über F, 47, 44 und k zugeführt und bei abgeschalteter Belüftung turbulenter Umrührung der Denitrifikation unterworfen. Die Kammern 2, 3, 4 und 5 arbeiten als in Kaskadenschaltung nachgeschaltete Kontaktkammern.

VI : Wiederbelüftung, nachgeschaltete Denitrifikation und Zwischenbelüftung : In der Kammer 1 wird der über 42 zugeführte Rücklaufschlamm wiederbelüftet. Abwasser wird über 9, 37, b und d den Kontaktkammern 2 und 3 verteilt zugeführt. In der Kammer 4 findet Denitrifikation des über r zuströmenden Schlamm-Wassergemisches statt. Dieses strömt über s in die Kammer 5 weiter und wird dort erneut einer Belüftung (Zwischenbelüftung) unterworfen.

VII : Nachgeschaltete Denitrifikation ohne Zwischenbelüftung und ohne Schlammwiederbelüftung : Das gesamte Abwasser fließt über 43 und C, der Rücklaufschlamm über 42 in die Kontaktkammer 1, die ebenso wie die in Kaskadenanordnung nachgeschalteten Kammern 2, 3 und 4 als Kontaktkammer betrieben wird. In der letzten Kammer 5 findet bei abgeschalteter Belüftung und turbulenter Umrührung die Denitrifikation der in den Kammern 1, 2, 3 und 4 vorbehandelten Schlammwassermischung statt.

VIII : Abschaltung von Beckenteilen : Die Kammern 1, 2, 3 sind außer Betrieb. Der Rücklaufschlamm gelangt über 41, D, 43, B zum Aufenthaltsraum 30 und von da zusammen mit dem Abwasser über die Verteilerrinne 7 und die geöffneten Schieber f, h in die noch in Betrieb befindlichen Kontaktammern 4 und 5.

IX : Schockbelastung und/oder Simultanfällung : Der Rücklaufschlamm gelangt über 41, D, 43, B zur Aufenthaltskammer 30, wo er mit dem zulaufenden Abwasser mittels des Rührwerks 33 ca. 10 bis 20 Minuten lang ohne Belüftung durch Mischung gehalten wird. Das Schlammabwassergemisch gelangt dann in verteilter Zuführung über die Absperrorgane b, d, f, h und j direkt in die Kontaktkammern 1 bis 5.

X : Verteilte Rücklaufschlammführung : Alle Kammern 1, 2, 3, 4, 5 werden als Kontaktkammern betrieben, die bezüglich des Abwasserzulaufs in Kaskade geschaltet sind. Das Abwasser wird über 30, B, 43 und C der ersten Kontaktkammer 1 zugeführt. Dagegen gelangt der Rücklaufschlamm in verteilter Zuführung über die geöffneten Absperrorgane j, b, d, f und h verteilt in die Einzelkontaktkammern 1, 2, 3, 4, 5, wobei eine Einstellung entsprechend dem jeweiligen Bedarf möglich ist.

Das Absperrorgan G wird nur für den Abzug von Überschußschlamm, das Absperrorgan F nur für den Abzug von Schwimmschlamm geöffnet. Die Stellungen dieser Absperrorgane sind daher in der Tabelle nicht aufgeführt.

Wie für den Fachmann ohne weiteres ersichtlich ist, sind Variationen der vorstehend als Beispiel beschriebenen Betriebsweisen ohne weiteres möglich, z. B. Wiederbelüftung in mehr als einer Kammer, und dgl. Auch die Zahl der Kammern kann erhöht werden.

Tabelle

Stellung der Absperrorgane in Fig. 10 für verschiedene Betriebsweisen

|   | I | II | III | IV | V | VI | VII | VIII | IX | X |
|---|---|----|-----|----|---|----|-----|------|----|---|
| A | o | - | o | o | - | o | - | o | o | - |
| B | - | o | - | - | o | - | o | o | o | o |
| C | - | o | - | - | o | - | o | - | - | o |
| D | - | o | - | - | o | - | o | o | o | - |
| E | o | o | o | o | o | o | o | - | - | o |
| a | - | - | o | o | - | o | - | - | - | - |
| b | o | - | o | - | - | o | - | - | o | o |
| c | o | o | o | - | - | o | - | o | o | o |
| d | o | - | o | - | - | o | - | - | o | o |
| e | o | o | o | - | - | - | - | o | o | o |
| f | o | - | o | - | - | - | - | o | o | o |
| g | o | o | o | - | - | - | - | o | o | o |
| h | o | - | o | - | - | - | - | o | o | o |
| i | - | o | o | - | - | - | - | - | o | - |
| j | - | - | o | - | - | - | - | - | o | o |
| k | - | - | - | - | o | - | - | - | - | - |
| l | - | - | - | o | - | - | - | - | - | o |
| m | o | o | o | o | o | o | o | - | - | - |
| n | o | o | o | o | o | o | o | - | - | - |
| o | - | - | - | - | - | - | - | - | - | - |

(Fortsetzung)

| | I | II | III | IV | V | VI | VII | VIII | IX | X |
|---|---|---|---|---|---|---|---|---|---|---|
| p | o | o | o | o | o | o | o | − | o | o · |
| q | o | o | o | o | o | o | o | x | o | o |
| r | o | o | o | o | o | o | o | − | o | o |
| s | o | o | o | o | o | o | o | o | o | o |
| t | − | − | − | − | − | − | − | − | − | o |
| u | − | − | o | − | − | − | − | − | − | − |
| v | − | − | − | − | − | − | − | − | − | o |

o = offen oder gedrosselt, − = geschlossen, x = beliebig

**Patentansprüche**

1. Anlage zur biologischen Abwasserreinigung mit mindestens drei hintereinander durchströmten, mit Belüftung ausgerüsteten Kammern (1, 2, 3, 4, 5) und einem Nachklärbecken (6), wobei die erste und wahlweise auch folgenden Kammern über einen Schlammverteiler (7) mit Rücklaufschlamm vom Nachklärbecken (6) beaufschlagbar und als vom Abwasserzulauf (9) getrennte Wiederbelüftungskammern für den Rücklaufschlamm betreibbar sind und die letzte und wahlweise auch vorhergehende Kammern über einen Abwasserverteiler mit zulaufendem Abwasser beaufschlagbar und als Kontaktkammern für das Gemisch aus Abwasser und Rücklaufschlamm betreibbar sind, wobei Abwasserverteiler und Schlammverteiler zu einer gemeinsamen Verteilerrinne (7) vereinigt sind, die durch Absperrorgane (c, e, g, i, l, n, v) in den einzelnen Kammern zugeordnete und mit ihnen über Absperrorgane (a, b, d, f, h, j, k) verbundene Abschnitte unterteilt und sowohl an den Abwasserzulauf (9) als auch mittels Absperrorgane (E, m, n, k) an die Rücklaufschlammleitung (8) vom Nachklärbecken (6) angeschlossen ist, so daß durch geeignete Einstellung der Absperrorgane (a-1, u, v) jede der Kammern (1-4) wahlweise als Wiederbelüftungs- oder Kontaktkammer betreibbar ist, dadurch gekennzeichnet, daß die Kammern (1, 2, 3, 4, 5) als durch Wände getrennte Abschnitte eines das Nachklärbecken (6) umgebenden Ringbeckens ausgebildet und der Abwasser- und Schlammverteiler (7) als ringförmige Verteilerrinne an Umfang des Ringbeckens angeordnet ist.

2. Anlage nach Anspruch 1, dadurch gekennzeichnet, daß die ringförmige Verteilerrinne (7) am Innenumfang des Ringbeckens zwischen Nachklärbecken und Kammern (1, 2, 3, 4, 5) angeordnet ist.

3. Anlage nach Anspruch 1 oder 2, dadurch gekennzeichnet, daß die den Abwasserverteiler (7) mit den einzelnen Kammern (1, 2, 3, 4, 5) verbindenden Absperrorgane (a, b, d, f, h, j, k) auf unterschiedliche Durchflußquerschnitte einstellbar oder automatisch steuerbar sind.

4. Anlage nach einem der Ansprüche 1 bis 3, dadurch gekennzeichnet, daß in jeder Kammer (1, 2, 3, 4, 5) die Belüfter (25) abschaltbar und eine Umwälzeinrichtung (26) in Betrieb setzbar ist, um diese Kammer als Denitrifikationskammer zu betreiben und daß eine Rücklaufwasserleitung (47, 44) vom Nachklärbecken (6) oder vom Abzug der letzten Kammer (5) mit dem Abwasserverteiler (7) über ein Absperrorgan (F) verbunden ist zur Zuführung von Rücklaufwasser zu der jeweils als Denitrifikationskammer betriebenen Kammer.

5. Anlage nach einem der Ansprüche 1 bis 4, dadurch gekennzeichnet, daß dem Abwasserverteiler (7) eine Aufenthaltskammer (30) für das Rohwasser mit einem für einen Aufenthalt von ca. 10 bis 20 Minuten ausreichendem Volumen vorgeschaltet und an eine Rücklaufschlammleitung (43) angeschlossen ist zur Durchführung einer Schockbelastung.

6. Anlage nach Anspruch 5, dadurch gekennzeichnet, daß die Aufenthaltskammer (30) mit Einrichtungen zum Zudosieren eines Fällungsmittels und einem Rührwerk (33) ausgerüstet ist.

7. Anlage nach einem der Ansprüche 1 bis 6, dadurch gekennzeichnet, daß die Verteilerrinne (7) im Bereich der ersten Kammer (1) an die Rücklaufschlammleitung (8) vom Nachklärbecken (6) und im Bereich der zweiten Kammer (2) an den Abwasserzulauf (9) angeschlossen ist.

8. Anlage nach Anspruch 7, dadurch gekennzeichnet, daß eine die Rücklaufschlammleitung (8) und den Abwasserzulauf (9) verbindende, die Verteilerrinne (7) umgehende Verbindungsleitung (43) mit Absperrorganen (D, B) vorgesehen ist, die wahlweise in der einen Richtung mit Abwasser und in der anderen Richtung mit Rücklaufschlamm beaufschlagbar ist.

**0 071 960**

9. Anlage nach einem der Ansprüche 1 bis 8, dadurch gekennzeichnet, daß die Kammern (1, 2, 3, 4, 5) mit am Boden verlegten feinblasigen Druckbelüftern ausgerüstet sind.

10. Anlage nach einem der Ansprüche 1 bis 9, dadurch gekennzeichnet, daß ortsbewegliche Rührwerke wahlweise in jede Kammer als Umwälzeinrichtung einsetzbar sind.

11. Anlage nach einem der Ansprüche 1 bis 10, dadurch gekennzeichnet, daß zwecks Ausschaltung aller Kammern (1, 2, 3, 4, 5) der Abwasserzulauf (9) unmittelbar mit dem Nachklärbecken (6) verbindbar ist.

## Claims

1. A biological sewage purification plant comprising at least three consecutive flow chambers (1, 2, 3, 4, 5) equipped with aeration means and a final-settling basin (6), wherein the first and optionally also the following chambers can be charged through a sludge distributor (7) with return sludge from the final-settling basin (6) and can be operated as re-aeration chambers for the return sludge separated from the sewage intake (9), and the last and optionally also preceding chambers can be charged with incoming sewage through a sewage distributor and can be operated as contact chambers for the mixture of sewage and return sludge, and wherein the sewage distributor and sludge distributor are combined into a common distributor channel (7) which is subdivided by shut-off elements (c, e, g, i, n, v) into sections associated with the individual chambers and connected thereto by shut-off elements (a, b, d, f, h, j, k) and is connected both to the sewage intake (9) and also, by means of shut-off elements (E, m, n, k), to the return sludge pipe (8) from the final-settling basin (6), whereby through suitable adjustment of the shut-off elements (a-1, u, v) each of the chambers (1-4) can be operated selectively as a re-aeration chamber or a contact chamber, characterized in that the chambers (1, 2, 3, 4, 5) are constructed as sections, separated by walls, of an annular basin surrounding the final-settling basin (6) and the sewage and sludge distributor (7) is arranged as an annular distributor channel at the circumference of the annular basin.

2. A plant according to claim 1, characterized in that the annular distributor channel (7) is arranged at the inner periphery of the annular basin between the final-settling basin and the chambers (1, 2, 3, 4, 5).

3. Plant according to claim 1 or 2, characterized in that the shut-off elements (a, b, d, f, h, j, k) connecting the sewage distributor (7) to the individual chambers (1, 2, 3, 4, 5) are adjustable to different flow cross-sections or can be automatically controlled.

4. Plant according to any of claims 1 to 3, characterized in that in each chamber (1, 2, 3, 4, 5) the aerators (26) can be shut-off and a circulator device (26) can be set in operation in order to operate this chamber as a denitrification chamber, and that a return water pipe (47, 44) from the final-settling basin (6) or from the outlet of the last chamber (5) is connected to the sewage distributor (7) by a shut-off element (F) in order to feed return water to the respective chamber being operated as a denitrification chamber.

5. Plant according to any of claims 1 to 4, characterized in that a dwell chamber (30) for the raw water, having a volume sufficient for a dwell time of approximately 10 to 20 minutes precedes the sewage distributor (7) and is connected to a return sludge pipe (43) in order to perform a shock-loading.

6. Plant according to claim 5, characterized in that the dwell chamber (30) is equipped with dosing means for a precipitant and which an agitator (33).

7. Plant according to any of claims 1 to 6, characterized in that the distributor channel (7) is connected to the return sludge pipe (8) from the final-settling basin (6) in the region of the first chamber (1) and to the sewage intake (9) in the region of the second chamber (2).

8. Plant according to claim 7, characterized in that a connecting pipe (43) connecting the return sludge pipe (8) and the sewage intake (9) and bypassing the distributor channel (7), with shut-off elements (D, B), is provided, which can be charged selectively with sewage in one direction and with return sludge in the other direction.

9. Plant according to any of claims 1 to 8, characterized in that the chambers (1, 2, 3, 4, 5) are equipped with fine-bubble pressure aerators laid on the bottom.

10. Plant according to any of claims 1 to 9, characterized in that mobile agitators can be inserted selectively into each chamber as a circulator device.

11. Plant according to any of claims 1 to 10, characterized in that in order to shut down all the chambers (1, 2, 3, 4, 5) the sewage intake (9) can be connected directly to the final-settling basin (6).

## Revendications

1. Installation pour l'épuration biologique des eaux usées, comprenant au moins trois chambres (1, 2, 3, 4, 5) pourvues d'un système d'insufflation d'air et traversées successivement par le courant et un bassin de décantation finale (6), la première chambre et, selon les nécessités, des chambres subséquentes pouvant être alimentées en boue de recyclage à partir du bassin de décantation finale (6) au moyen d'un distributeur de boue (7) et pouvant être exploitées comme chambres de réinsufflation d'air, séparées de l'arrivée des eaux usées (9), pour la boue de recyclage, tandis que la dernière chambre et, selon les nécessités, des chambres précédentes peuvent être alimentées en eaux usées affluentes au moyen d'un distributeur d'eaux usées et peuvent être exploitées comme chambres de contact pour le mélange d'eaux usées et de boue de recyclage, le distributeur d'eaux usées et le distributeur de boue étant combinés en un conduit distributeur commun (7) qui est subdivisé par des organes d'arrêt (c, e, g, i, l, n, v) en segments adjoints aux différentes chambres et reliés à celles-ci au moyen d'organes d'arrêt (a, b, d, f, h, j, k) et qui est raccordé à l'arrivée des eaux usées (9) et, au moyen d'organes d'arrêt (E, m, n, k), à la conduite de boue de recyclage (7) provenant du bassin de décantation finale (6), de telle manière que par un réglage approprié des organes d'arrêt (a-1, u, v), chacune des chambres (1-4) puisse être exploitée au choix comme chambre de réinsufflation d'air ou de contact, caractérisée en ce que les chambres (1, 2, 3, 4, 5) sont réalisées sous forme de segments, séparés par des cloisons, d'un bassin annulaire qui entoure le bassin de décantation finale (6) et en ce que le distributeur d'eaux usées et de boue (7) est disposé, sous forme de conduit distributeur annulaire, sur le pourtour du bassin annulaire.

2. Installation selon la revendication 1, caractérisée en ce que le conduit distributeur annulaire (7) est disposé sur le pourtour intérieur du bassin annulaire, entre le bassin de décantation finale et les chambres (1, 2, 3, 4, 5).

3. Installation selon la revendication 1 ou 2, caractérisée en ce que les organes d'arrêt (a, b, d, f, h, j, k) qui relient le distributeur d'eaux usées (7) aux différentes chambres (1, 2, 3, 4, 5) peuvent être réglés à des sections de passage différentes ou être commandés automatiquement.

4. Installation selon l'une quelconque des revendications 1 à 3, caractérisée en ce que dans chaque chambre (1, 2, 3, 4, 5), l'insufflateur d'air (25) peut être mis hors service et un dispositif de mise en circulation (26) peut être mis en marche, afin d'exploiter cette chambre comme chambre de dénitrification, et en ce qu'une conduite d'eau de recyclage (47, 44) provenant du bassin de décantation finale (6) ou de l'écoulement de la dernière chambre (5) est raccordée au distributeur d'eaux usées (7) avec interposition d'un organe d'arrêt (F), pour l'alimentation en eau de recyclage de la chambre qui est exploitée comme chambre de dénitrification.

5. Installation selon l'une quelconque des revendications 1 à 4, caractérisée en ce qu'il est disposé, en amont du distributeur d'eaux usées (7), une chambre de séjour (30) pour les eaux brutes, ayant un volume suffisant pour un séjour d'environ 10 à 20 mn, cette chambre de séjour étant raccordée à une conduite de boue de recyclage (43), pour l'exécution d'un chargement de choc.

6. Installation selon la revendication 5, caractérisée en ce que la chambre de séjour (30) est équipée de dispositifs pour l'addition dosée d'un agent de précipitation, ainsi que d'un agitateur (33).

7. Installation selon l'une quelconque des revendications 1 à 6, caractérisée en ce que le conduit distributeur (7) est raccordé, dans la région de la première chambre (1), à la conduite de boue de recyclage (8) provenant du bassin de décantation finale et, dans la région de la deuxième chambre (2), à l'arrivée des eaux usées (9).

8. Installation selon la revendication 7, caractérisée en ce qu'il est prévu une conduite de raccordement (43) munie d'organes d'arrêt (D, B) qui relie la conduite de boue de recyclage (8) et l'arrivée des eaux usées (9) en by-passant le conduit distributeur (7) et qui peut être parcourue au choix dans un sens par les eaux usées et dans l'autre sens par la boue de recyclage.

9. Installation selon l'une quelconque des revendications 1 à 8, caractérisée en ce que les chambres (1, 2, 3, 4, 5) sont équipées d'insufflateurs d'air comprimé à fines bulles, posés sur le fond.

10. Installation selon l'une quelconque des revendications 1 à 9, caractérisée en ce que des agitateurs transportables peuvent être mis en place, d'après les nécessités, dans chaque chambre en tant que dispositif de mise en circulation.

11. Installation selon l'une quelconque des revendications 1 à 10, caractérisée en ce qu'en vue de la mise hors service de toutes les chambres (1, 2, 3, 4, 5), l'arrivée des eaux usées (9) peut être raccordée directement au bassin de décantation finale (6).

Fig.1

Fig.2

0071 960

Fig.3

Fig.4

0 071 960

0 071 960

Fig. 5

Fig. 6

3

Fig.7

Fig.8

0071 960

Fig.9

# F i g.10